Europäisches Patentamt

European Patent Office

Office européen des brevets

(11) Publication number: **0 230 134 B1**

(12) **EUROPEAN PATENT SPECIFICATION**

(45) Date of publication of patent specification: **01.04.92**

(51) Int. Cl.⁵: **H02P 8/00**

(21) Application number: **86309924.8**

(22) Date of filing: **18.12.86**

(54) **System for driving drum.**

(30) Priority: **18.12.85 JP 285125/85**
**18.12.85 JP 285126/85**
**19.12.85 JP 286574/85**
**27.11.86 JP 282295/86**

(43) Date of publication of application:
**29.07.87 Bulletin 87/31**

(45) Publication of the grant of the patent:
**01.04.92 Bulletin 92/14**

(84) Designated Contracting States:
**DE FR GB**

(56) References cited:
**EP-A- 0 089 673**      **EP-A- 0 133 580**
**EP-A- 0 145 913**      **DE-A- 2 822 830**
**DE-A- 3 441 451**      **US-A- 4 355 249**

(73) Proprietor: **Shinko Electric Co. Ltd.**
**12-2, Nihonbashi 3-chome**
**Chuo-ku Tokyo 103(JP)**

(72) Inventor: **Maeno, Satoru c/o Shinko Electric Co., Ltd**
**Ise Kohjoh, 100, Takegahana-cho**
**Ise-shi Mie-ken(JP)**
Inventor: **Fukuyama, Norio c/o Shinko Electric Co., Ltd**
**Ise Kohjoh, 100, Takegahana-cho**
**Ise-shi Mie-ken(JP)**
Inventor: **Ohishi, Tetsuo c/o Shinko Electric Co., Ltd**
**Ise Kohjoh, 100, Takegahana-cho**
**Ise-shi Mie-ken(JP)**
Inventor: **Kyutoku, Senzo c/o Shinko Electric Co., Ltd**
**Ise Kohjoh, 100, Takegahana-cho**
**Ise-shi Mie-ken(JP)**
Inventor: **Nakamura, Thutomu c/o Shinko Electric Co., Ltd**
**Ise Kohjoh, 100, Takegahana-cho**
**Ise-shi Mie-ken(JP)**

(74) Representative: **Read, Matthew Charles et al**
**Venner Shipley & Co. 368 City Road**
**London EC1V 2OA(GB)**

EP 0 230 134 B1

## Description

BACKGROUND OF THE INVENTION

This invention relates to an improved stepping motor system which may be used for driving a drum, for example, of a color copying machine or a printer.

In recent years, it has been proposed to incorporate a pulse motor (stepping motor) in a drum of the type described so as to drive the drum for rotation. The pulse motor comprises an inner stator fixedly mounted on a drum shaft, and an outer rotor disposed around the inner stator coaxially therewith and fixed relative to the drum, so that the drum is rotated together with the rotor. Since the pulse motor is accommodated within the drum, the machine can be of a compact size. The pulse motor of this type is often referred to as "outer rotor type" in the trade. This arrangement is disclosed in Japanese Patent Application Laid-Open (Kokai) No. 49-115429. Generally, a pulse motor is subjected to a considerable torque ripple, and besides since the pulse motor is used in an open loop circuitry, the pulse motor is not rotated smoothly, which affects the quality of a resultant copied image or a printed image.

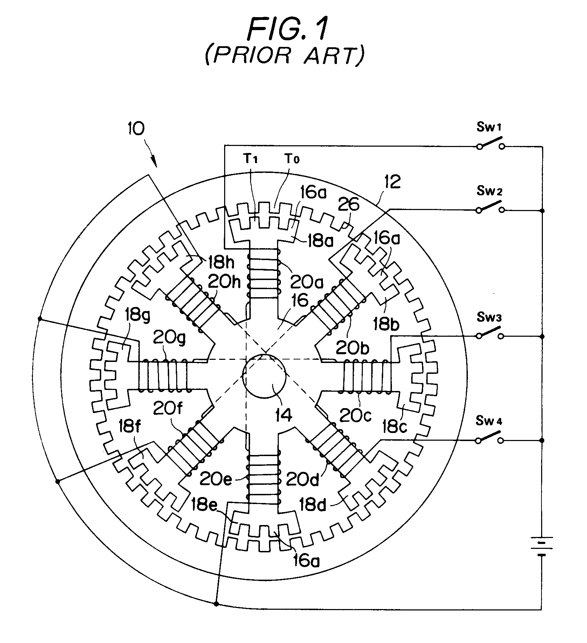

Fig. 1 shows a pulse motor 10 of the outer rotor type which comprises a hollow cylindrical rotor 12 disposed coaxially around a shaft 14 and having a number of rotor teeth T0 formed on an inner peripheral surface thereof and spaced a predetermined pitch, and a stator 16 fixedly mounted on the shaft 14 and disposed coaxially within the cylindrical rotor 12. The stator 16 has eight magnetic poles 18a to 18h spaced equally circumferentially, that is, at an interval of 45°. Each of the magnetic poles 18a to 18h has a plurality of stator teeth T1 disposed in closed spaced opposed relation to the rotor teeth T0 of the rotor 12 and spaced from one another a pitch equal to the pitch of the rotor teeth T0 of the rotor 12. With this construction, when the stator teeth T1 of the magnetic pole 18a are 180° out of phase with the rotor teeth T0, as shown in Fig. 1, the stator teeth T1 of the magnetic poles 18b, 18c, 18d and 18e are 45°, 90°, 135° and 180° out of phase with the rotor teeth T0 of the rotor 12. Similarly, the stator teeth T1 of the magnetic poles 18f, 18g and 18h are 225°, 270° and 315° out of phase with the rotor teeth T0 of the rotor 12.

Exciting coils 20a to 20h are wound around the magnetic poles 18a to 18h of the stator 16, respectively. The coils 20a and 20e are serially connected together via a switch SW1, the coils 20b and 20f are serially connected together via a switch SW2, the coils 20c and 20g are connected together via a switch SW3, and coils 20d and 20h are serially connected together via a switch SW4. With this construction, when the switches SW1 to SW4 are sequentially closed, so that the mating coils 20a and 20e, the mating coils 20b and 20f, the mating coils 20c and 20g and the mating coils 20d and 20h are sequentially excited one after another, thereby rotating the rotor 12 in a clockwise direction in a step-like manner.

The position of the rotor teeth T0 of the rotor 12 is detected by either an optical sensor or a magnetic sensor, and in accordance with the results of this detection, the pulse motor 10 is supplied with current so as to serve as a servo motor. In this case, it is important that the cogging and the torque ripple are kept to a low level. To achieve this, it is necessary that the magnetic reluctance between the stator teeth T1 and the rotor teeth T0 varies sinusoidally. In other words, it is necessary that the voltage induced in each coil is sinusoidally varied in accordance with the rotation of the rotor 12 to reduce a distortion of the induced voltage. Conventionally, in order to achieve the above-mentioned sinusoidal variation of the magnetic reluctance or the induced voltage, grooves of either the rotor 12 or the stator 16 which separate the teeth from one another are arranged obliquely relative to the axis of the shaft 14. Since each of the rotor 12 and the stator 16 is constructed of laminated sheets, it is rather cumbersome to provide such a skewed slot arrangement in the manufacture of the rotor or the stator. This problem is serious particularly where the pulse motor 10 is of the hybrid type including a rotor having a permanent magnet contained in the laminated core sheets.

In a drum drive system under consideration, generally, a detector called "resolver" is used for detecting the position of the magnetic poles of the pulse motor relative to the rotor of the pulse motor, that is to say, the position of rotation of the rotor, in order to energize the pulse motor at a proper timing. The conventional resolver comprises a rotor and a stator which are configured and arranged as described above for the conventional pulse motor, so as to cause the magnetic reluctance between the stator teeth T1 and the rotor teeth T0 to vary sinusoidally. Therefore, because of the skewed slot arrangement, the manufacture of such a conventional resolver is also cumbersome. Further, in such a magnetic pole position-detecting method, a two-phase sinusoidal exciting signal composed of sine and cosine waves is supplied to the stator coils of the resolver. In this case, it is known that the following formula is obtained:

$$X = A \sin (2\pi ft + \theta)$$

wherein $\theta$ is an angle of rotation of the rotor, f is a frequency of the exciting signal, and X is an output of the stator coils. Therefore $X = A \sin \theta$ is obtained by sampling the output X every $2\pi ft = 2\pi$, and $X = A \cos \theta$ is obtained by sampling the output X every $2\pi ft = (2\pi + \pi/2)$, thereby detecting an angle of rotation of the rotor. However, there inevitably develops an error in amplitude and phase of the two-phase sinusoidal exciting current, and therefore the detection is not carried out accurately.

EP-A-0 145 913 discloses a servo motor system which has a pole configuration similar to that described in relation to Figure 1. The servo motor system includes a rotor and a stator, one of which is formed with a plurality of first teeth formed with an equal spacing around the entire periphery and the other of which is formed with equally spaced second teeth in opposed relation to the first teeth, the second teeth being arranged in groups associated with respective magnetic poles having exitation coils and configured to produce a given magnetic coupling relationship between the rotor and stator teeth, and detector means for detecting the relative position of rotation between said rotor and stator teeth said detector means being arranged to produce a pole position detection signal which varies in a manner corresponding to said coupling relationship upon relative rotation of the rotor and stator, current control means for controlling current applied to said exitation coils, and means for driving said current control means with a driving signal of a phase related to that of said pole position detection signal.

The present invention provides an improved pole configuration which produces reduced torque ripple.

The invention is characterised in that the spacing of the second teeth in each said group is selected such that when a tooth thereof disposed centrally of the group is aligned with one of the first teeth, the second teeth in said group disposed on opposite sides of said centrally disposed tooth are progressively misaligned with corresponding opposed ones of said first teeth such that the area of overlap between the opposed first and second teeth progressively decreases in a circumferential direction outwardly of the center of the group, whereby the magnetic flux linkage between the rotor and stator varies sinusoidally upon rotation of the rotor in a manner tending to minimise torque ripple.

In the accompanying drawings:
Fig. 1 is a schematic view of a conventional pulse motor;
Fig. 2 is a block diagram of a drum drive system provided in accordance with the present invention;
Fig. 3 is partly-broken side-elevational view of a drum, showing a pulse motor and a position sensor incorporated therein;
Fig. 4 is a side-elevational view of the interior of the pulse motor;
Fig. 5 is a schematic view showing the relation between the teeth on the rotor and stator of the pulse motor;
Fig. 6 is a diagrammatical view showing a waveform of a two-phase drive signal;
Fig. 7 is a view similar to Fig. 4 but showing the position sensor;
Fig. 8 is a circuit diagram of a portion of a pole-position detecting circuit;
Fig. 9 is a block diagram of a portion of the pole-position detecting circuit;
Fig. 10 is a block diagram of a rotational-position detecting circuit;
Figs. 11 to 13 are diagrammatical illustrations showing various waveforms appearing in the rotational-position detecting circuit.

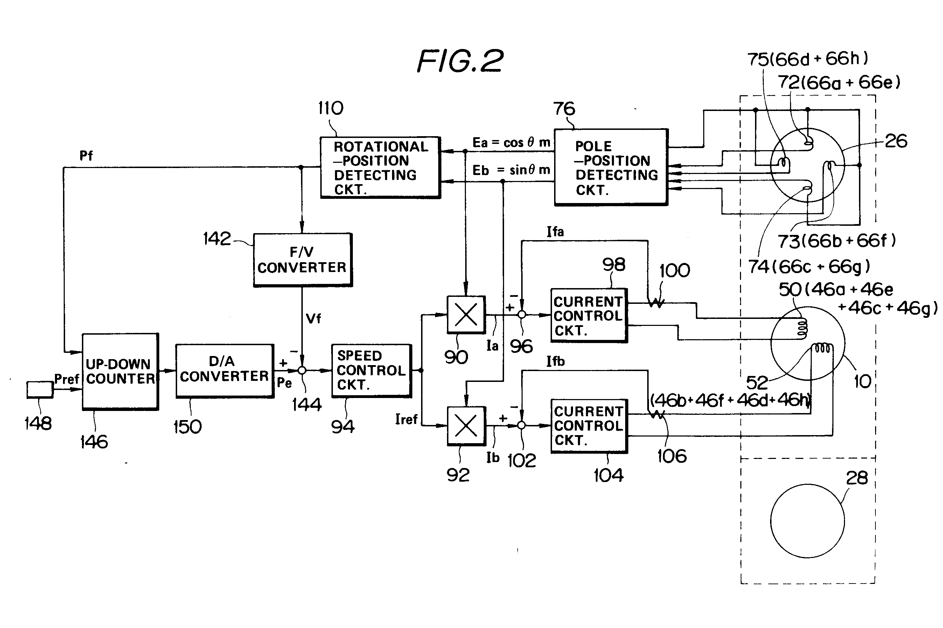

Fig. 2 shows a block diagram of a system for driving a drum, for example, of a color copying machine, a line printer or the like.

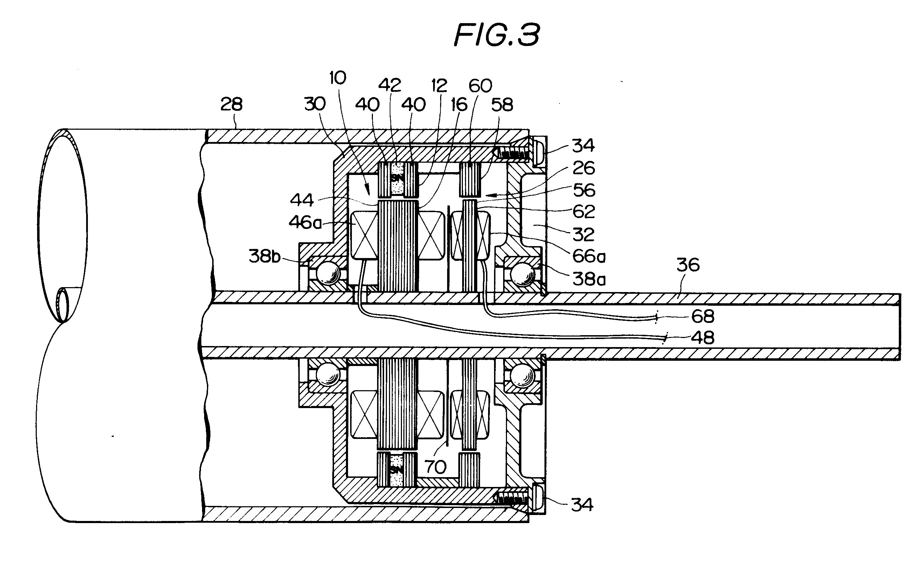

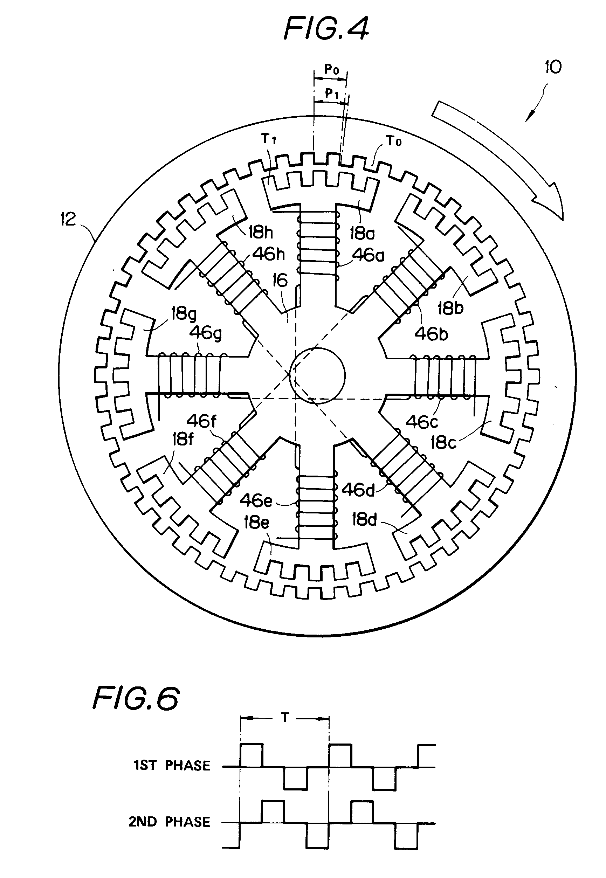

As shown in Fig. 3, the drum drive system comprises a pulse motor 10 of the outer rotor-type including a rotor 12 and a stator 16 having magnetic poles 18a to 18h (Fig. 4), and a position sensor 26 for detecting the position of the magnetic poles of the stator 16 relative to the rotor 12, both of the pulse motor 10 and the position sensor 26 being accommodated within a hollow cylindrical drum 28. More specifically, the pulse motor 10 comprises a cup-like or cylindrical casing 30 with a lid 32 for closing an open end of the casing 30, and the drum 28, the casing 30 and the lid 32 are joined together by bolts 34. The casing 30 and the lid 32 are mounted on a shaft 36 for rotation about an axis thereof through bearings 38a and 38b, the shaft 36 extending through the drum 28 coaxially therewith, so that the drum is also rotated together with the casing 30 and the lid 32 relative to the shaft 36. The stator 16 of the pulse motor 10 is fixedly mounted on the shaft 36 while the rotor 12 of an annular shape is disposed around the stator 16 coaxially therewith and fixed to the inner peripheral surface of the drum 28.

The rotor 12 of the pulse motor 10 is of the hybrid type and comprises a pair of annular outer cores 40 and 40 (Fig. 3) and an annular magnet 42 sandwiched between these cores. The stator 16 comprises an inner core 44 having eight radial magnetic poles 18a to 18h spaced equally circumferentially, and eight exciting coils 46a to 46h wound around the magnetic poles 18a to 18h, respectively. The coils 46a to 46h are connected to a power source via lead wires 48 for being excited as later described, the lead wires 48 passing through the hollow shaft 36.

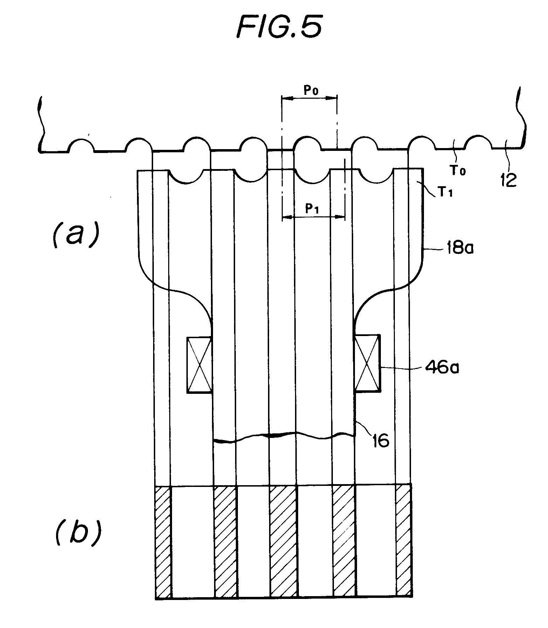

Each of the outer cores 40 and 40 of the rotor 12 has a series of teeth T0 formed over the entire inner periphery thereof and spaced from one another at a pitch P0, and the teeth T0 on one core 40 and the teeth T0 on the other core 40 being in alignment with each other when viewed from one side of the rotor 12 (Fig. 4). A series of teeth T1 are formed on the outer end of each of the eight magnetic poles 18a to 18h of the stator 16, the teeth T1 being spaced from one another at a pitch P1. The stator teeth T1 are disposed in closely spaced opposed relation to the rotor teeth T0. The pitch P1 of the stator teeth T1 is 1.125 (i.e., 9/8) times greater than the pitch P0 of the rotor teeth T0. With this arrangement, when the center of the magnetic pole 18a of the stator 16 is brought into alignment with the center of one tooth T0 of the rotor 12, as shown in Fig. 5(a), the five stator teeth T1 on the magnetic pole 18a are out of phase from the opposed rotor teeth T0 90°, 45°, 0°, +45°, and +90°, respectively. And, the area of overlap between each pair of opposed teeth T0 and T1 decreases progressively from the center of the magnetic pole 18a toward the opposite ends, as shown by hatching in Fig. 5(b). With this arrangement, when the rotor 12 is rotated, the magnetic flux linking each of the coils 18a to 18h is varied in a sinusoidal fashion, so that the voltage induced in the coil varies in a sinusoidal fashion as a function of the rotation angle of the motor, thereby reducing the torque ripple.

When the center of the magnetic pole 18a of the stator 16 is brought into alignment with the center of one tooth T0 of the rotor 12, as shown in Fig. 5(a), the centers of the magnetic poles 18b to 18d are 90°, 180° and 270° out of phase from corresponding ones of the rotor teeth T0, respectively. And, the centers of the magnetic poles 18e to 18h disposed 180° out of phase from the magnetic poles 18a to 18d, respectively, are 90°, 180° and 270° out of phase from corresponding ones of the rotor teeth T0, respectively. In other words, the central stator teeth T1 of the diametrically opposite magnetic poles 18a and 18e are out of phase from corresponding ones of the rotor teeth T0 by the same angle. This is also true of the diametrically opposite magnetic poles 18b and 18f, the diametrically opposite magnetic poles 18c and 18g and the diametrically opposite magnetic poles 18d and 18h.

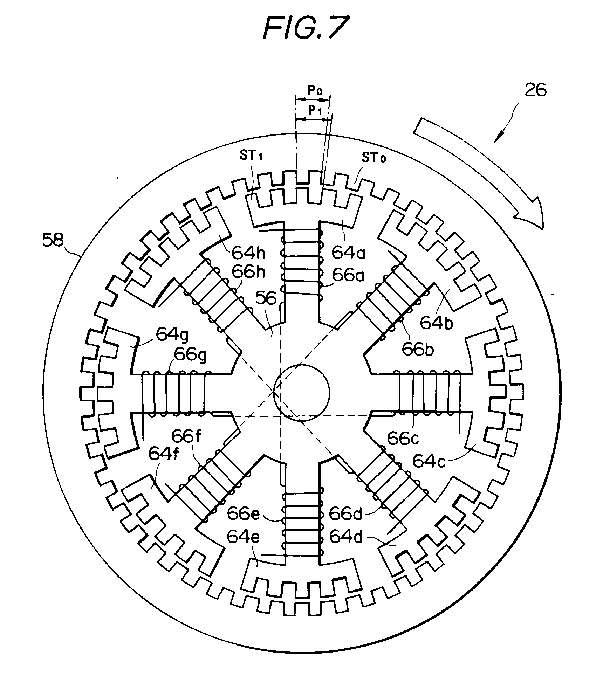

The coils 46a, 46e, 46c and 46g are serially connected together to form a first motor coil 50 (Fig. 2) while the coils 46b, 46f, 46d and 46h are serially connected together to form a second motor coil 52. A two-phase drive signal composed of two 90°-out-of-phase alternating currents (Fig. 6) is supplied to the motor coils 50 and 52 to operate the pulse motor 10 in a so-called bipolar fashion, so that the rotor 12 is rotated in a direction indicated by an arrow in Fig. 4. In this case, the rotor 12 is rotated or angularly moved one pitch P0 of the rotor teeth T0 per one period T of the frequency of the drive signal.

The position sensor 26 comprises an annular stator 56 fixedly mounted on the shaft 36, and an annular rotor 58 disposed around the stator 56 coaxially therewith and fixed to the inner peripheral surface of the drum 28. The sensor rotor 58 comprises an annular outer core 60, and the sensor stator 56 comprises an inner core 62 having eight radial magnetic poles 64a to 64h spaced equally circumferentially, and eight exciting coils 66a to 66h wound around the magnetic poles 64a to 64h, respectively. The coils 66a to 66h are connected to an associated circuitry via lead wires 68, the lead wires 68 passing through the hollow shaft 36. A magnetic shielding plate 70 is fixedly mounted on the shaft 36 and is disposed between the stator 16 of the pulse motor 10 and the sensor stator 56.

In order that the position sensor 26 can accurately detect the position of the magnetic poles 18a to 18h of the stator 16 of the pulse motor 10 relative to the rotor 12, the teeth arrangement of the rotor and stator of the position sensor 26 is identical to that of the rotor and stator of the pulse motor 10. More specifically, as shown in Fig. 7, the outer core 60 of the position sensor 26 has a series of teeth ST0 formed over the entire inner periphery thereof and spaced from one another at a pitch P0 which is equal to the pitch P0 of the rotor teeth T0 of the pulse motor 10, and a series of teeth ST1 are formed on the outer end of each of the eight magnetic poles 64a to 64h of the stator 56, the teeth ST1 being spaced from one another a pitch P1 which is equal to the pitch P1 of the stator teeth T1 of the pulse motor 10. The stator teeth ST1 are closely spaced from the rotor teeth ST0. The pitch P1 of the stator teeth ST1 is 1.125 (i.e., 9/8) times greater than the pitch P0 of the rotor teeth ST0. With this arrangement, when the center of the magnetic pole 64a of the stator 56 is brought into alignment with the center of one tooth ST0 of the rotor 58, as described above for the pulse motor 10 with reference to Fig. 5(a), the five stator teeth ST1 on the magnetic pole 64a are out of phase from the opposed rotor teeth ST0 -90°, -45°, 0°, +45°, and +90°, respectively. And, the area of overlap between each pair of opposed teeth ST0 and ST1 decreases progressively from the center of the magnetic pole 64a toward the opposite ends, as described above for the pulse motor 10 with reference to Fig.5. With this arrangement, the magnetic reluctance between the teeth ST1 of the stator 56 and the teeth ST0 of the rotor 58 varies sinusoidally when the rotor 58 is rotated. The coils 66a and 66e are serially connected together to provide an exciting coil 72 (Fig. 2), and similarly the serially connected coils 66b and 65f, the serially connected 66c and 66g and the serially connected coils 66d and 66h provide exciting coils 73, 74 and 75, respectively.

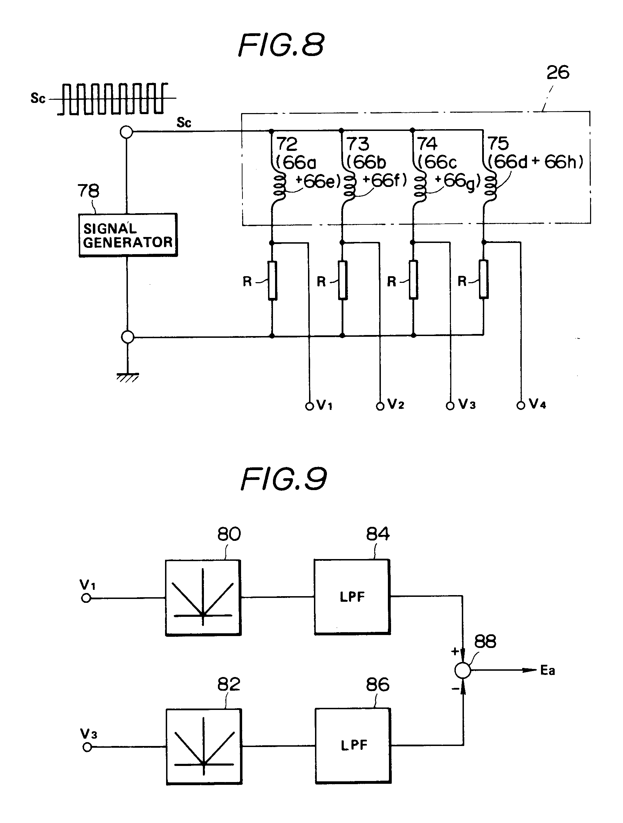

A pole position-detecting circuit 76 (Fig. 2) will now be described with reference to Figs. 8 and 9. Four shunt resistors R are serially connected to the exciting coils 72 to 75, respectively, to provide four serial circuits. One of the terminals of each of these four serial circuits are connected together, and a carrier signal Sc is supplied thereto. The other terminals of the four serial circuits are grounded. The carrier signal Sc is in the form of an square wave having a frequency of 5 kHz and is outputted from a signal generator 78. Each of shunt voltages V1 to V4 is derived from the junction point between the shunt resistor R and exciting coil 72 (73, 74, 75), the shunt voltage being proportional to the current passing through the exciting coil. The shunt voltages V1 to V4 are produced by a change in the magnetic reluctance developing between the teeth ST0 of the sensor rotor 58 and the teeth ST1 of the sensor stator 56 upon rotation of the sensor rotor 58. More specifically, the change of the magnetic reluctance causes a change in the impedance of the exciting coils 72 to 75, so that the carrier signal Sc is modulated. Therefore, the carrier signal modulated by the modulating wave varying in accordance with the pitch P0 and having a frequency F of about 100 Hz is supplied to the shunt resistor R, and the modulated carrier signal is outputted as the shunt voltages V1 to V4. The shunt voltages V1 and V3 of opposite phases are applied respectively to absolute value circuits 80 and 82 in which they are subjected to full wave rectification. The output of each of the absolute value circuits 80 and 82 has a frequency twice as high as the above modulated wave and therefore is a full wave-rectification waveform having a frequency twice as high as the carrier signal Sc. The outputs of the absolute value circuits 80 and 82 are fed to low pass filters 84 and 86, respectively, in which high frequency components such as the carrier signal SC are removed from these outputs. Therefore, the signal outputted from each of the low pass filters 84 and 86 is composed of the fundamental wave (frequency F) corresponding to the pitch P0 and the DC component. The output signals of the low pass filters 84 and 86 are fed to a subtracter 88 in which the DC components are removed from the output signals by subtraction and the fundamental waves of opposite phases are added together, so that the subtracter 88 outputs a sinusoidal detecting signal Ea having a frequency F. Also, the shunt voltages V2 and V4 of opposite phases are processed in the same manner as described above for the shunt voltages V1 and V3, and the pole position detecting circuit 76 outputs another detecting signal Eb

which is 90° out of phase from the detecting signal Ea. In this case, the following formulas (1) and (2) are obtained:

$$Ea = \cos (2\pi x/P0) \qquad (1)$$

$$Eb = \sin (2\pi x/P0) \qquad (2)$$

wherein x is the amount of movement of the sensor rotor 58 relative to the sensor stator 56. In other words, each time the sensor rotor teeth ST0 moves relative to the stator sensor teeth ST1 by an amount corresponding to one pitch P0, one cycle of each of the detecting signals Ea and Eb is obtained.

Multipliers 90 and 92 multiply the respective sensing signals Ea and Eb, outputted from the pole position detecting circuit 76, by a speed command signal Iref outputted from a speed control circuit 94 as later described, and the multipliers 90 and 92 output respective current command signals Ia and Ib. If "$2\pi x/P0$" is substituted by "$\theta m$" in the above formulas (1) and (2), the following formulas (3) and (4) are obtained:

$$Ia = Iref \cdot \cos \theta m \qquad (3)$$

$$Ib = Iref \cdot \sin \theta m \qquad (4)$$

The current command signal Ia outputted from the multiplier 90 is fed to a subtracter 96 in which a current feedback signal Ifa is subtracted from the command signal Ia, and the output of the subtracter 96 is applied to a current control circuit 98. The value of the current supplied to the motor coil 50 of the pulse motor 10 is detected by a current detecting device 100 to produce a detecting signal which is fed as the above-mentioned current feedback signal Ifa to the subtracter 96. Then, the current control circuit 98 amplifies a difference between the current command signal Ia and the current feedback signal Ifa to produce an amplifier signal, so that the voltage applied to the motor coil 50 of the pulse motor 10 is varied in accordance with the amplifier signal, thereby keeping the drive current, applied to the motor coil 50, to a value corresponding to the current command signal Ia. In other words, the current control circuit 98 supplies to the motor coil 50 the alternating current which has an amplitude corresponding to the current amplitude command signal Iref outputted from the speed control circuit 94 and is in phase with the detecting signal Ea (cos $\theta m$) outputted from the pole position detecting circuit 76.

Similarly, the current command signal Ib outputted from the multiplier 92 is fed to a subtracter 102 in which a current feedback signal Ifb is subtracted from the command signal Ib, and the output of the subtracter 102 is applied to a current control circuit 104. The value of the current supplied to the motor coil 52 of the pulse motor 10 is detected by a current detecting device 106 to produce a detecting signal which is fed as the above-mentioned current feedback signal Ifb to the subtracter 102. Then, the current control circuit 104 amplifies a difference between the current command signal Ib and the current feedback signal Ifb to produce an amplifier signal, so that the voltage applied to the motor coil 52 of the pulse motor 10 is varied in accordance with the amplifier signal, thereby keeping the drive current, applied to the motor coil 52, to a value corresponding to the current command signal Ib. In other words, the current control circuit 104 supplies to the motor coil 52 the alternating current which has an amplitude corresponding to the current amplitude command signal Iref outputted from the speed control circuit 94 and is in phase with the detecting signal Eb (sin $\theta$m) outputted from the pole position detecting circuit 76.

Thus, the drive current corresponding to the current command signal Ia (Iref·cos $\theta$m) is supplied to the motor coil 50, and the drive current corresponding to the current command signal Ib (Iref·sin$\theta$m) is supplied to the motor coil 52. Thus, instead of the two-phase square signal shown in Fig. 6, the two-phase sinusoidal signal operates the pulse motor 10 in a bipolar fashion. In this case, the rotor 12 is rotated quite smoothly, and a torque ripple is kept to a very low level. The rotor 12 is rotated one pitch P0 of the rotor teeth T0 per one cycle of each of the current command signals Ia and Ib. As a result, the rotor teeth T0 of the pulse motor 10 is moved one pitch P0 thereof in synchronization with the movement of the sensor rotor teeth ST1 relative to the sensor stator teeth ST0 by an amount corresponding one pitch P0 of the sensor rotor teeth ST1. The torque developing on the rotor 12 is varied in accordance with the current amplitude command signal Iref, and the greater the current amplitude command signal becomes, the greater torque the rotor 12 produces.

If, out of the magnetic flux $\phi$ produced by the permanent magnet 42, those portions or components linking the motor coils 50 and 52, respectively, are represented by the following formulas (5) and (6), and if "$\theta$m = $\omega$m·t" is provided, then velocity electromotive forces Va and Vb are represented by the following formulas (7) and (8):

$$\phi a = \phi \cdot \sin \theta m \qquad (5)$$

$$\phi b = - \phi \cdot \cos \theta m \qquad (6)$$

$$Va = \omega m \cdot \phi \cdot \cos \phi m \qquad (7)$$

$$Vb = \omega m \cdot \phi \cdot \sin \phi m \qquad (8)$$

wherein t is time.

Therefore, the torque Tm developing in each of the motor coils 50 and 52 is represented by the following formula:

$$Tm = \frac{1}{\omega m} (Va \cdot Ia + Vb \cdot Ib)\alpha \; Iref \cdot \phi \qquad (9)$$

Therefore, if the magnetic flux $\phi$ is constant, the torque Tm is proportional to the current amplitude command signal Iref, so that this drum drive system has the advantage that the speed of rotation of the rotor 12 of the pulse motor 10 is controlled only by the current amplitude command signal Iref as is the case with a DC motor.

A method of controlling the speed of rotation of a motor in such a manner is known and disclosed in "Fuji Jiho" (Vol. 53-9) entitled "Transvector control of AC devices". However, the present invention is characterized in that the transvector control of AC devices is applied to a servo control of the pulse motor 10, so that the pulse motor 10, like a DC motor, can be rotated smoothly and be accurately controlled in speed of rotation.

In Fig. 2, numeral 110 denotes a rotational-position detecting circuit which is responsive to the detecting signals Ea and Eb to produce a position pulse signal Pf of a high resolution representative of the position of rotation of the drum 28. More specifically, each time the sensor rotor 58 is angularly moved by an amount corresponding to one pitch P0 of the sensor rotor teeth ST0 to obtain one cycle of each of the detecting signals Ea and Eb, the rotational-position detecting circuit 110 produces the position pulse signal Pf composed of several hundreds of pulses. The position pulse signal Pf corresponds to the position of rotation of the drum 28, and the frequency of the pulse signal Pf corresponds to the speed of rotation of the drum 28.

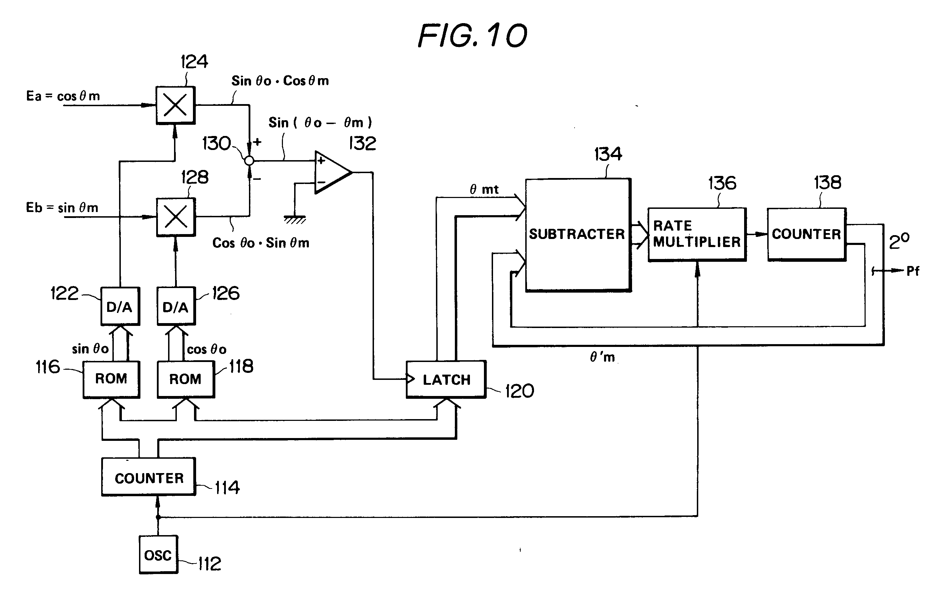

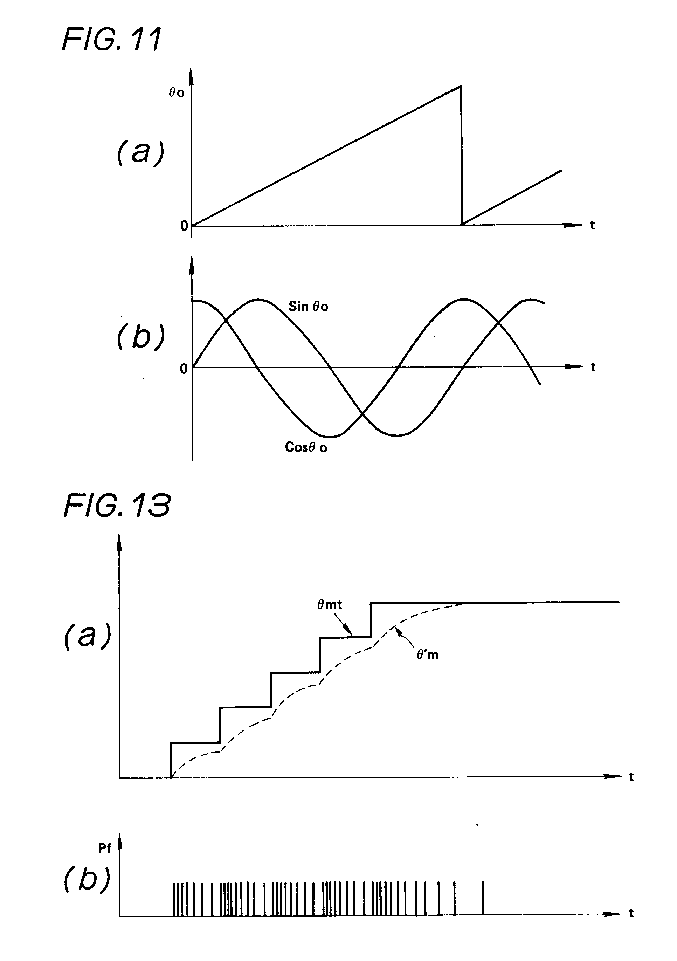

The rotational-position detecting circuit 110 will now be described with reference to Fig. 10. An oscillator 112 produces a clock pulse signal of a predetermined frequency, and reference clock pulses outputted from the oscillator 112 are fed to a counter 114. The counter 114 counts the reference clock pulses and outputs reference phase data $\theta$0 to function-producing ROMs 116 and 118 and also to a latch 120. The ROM 116 is responsive to the phase data $\theta$0 to produce sine data sine $\theta$0 which is converted by a D/A converter 122 into an analog signal and is fed to a multiplier 124. On the other hand, the ROM 118 is responsive to the reference phase data $\theta$0 to produce cosine data cos $\theta$0 which is converted by a D/A converter 126 into an analog signal and is fed to a multiplier 128. The relationship of the reference phase data $\theta$0, the sine data sin $\theta$0 and the cosine data cos $\theta$0 is

shown in Fig. 11(a) and (b). The sine data sin $\theta 0$ and cosine data cos $\theta 0$ converted into the respective analog signals are multiplied through the respective multipliers 124 and 128 by the detecting signals Ea(cos $\theta$m) and Eb(sin $\theta$m), respectively. The outputs of the multipliers 124 and 128 are fed to a subtracter 130 in which the multiplication result (cos $\theta 0$·sin $\theta$m) of the multiplier 128 is subtracted from the multiplication result (sin $\theta 0$·cos $\theta$m) of the multiplier 124. Therefore, the result of this subtraction is represented by "sin($\theta 0$ - $\theta$m)" as is clear from the following formula (10):

$$\sin \theta 0 \cdot \cos \theta m - \cos \theta 0 \cdot \sin \theta m = \sin (\theta 0 - \theta m) \tag{10}$$

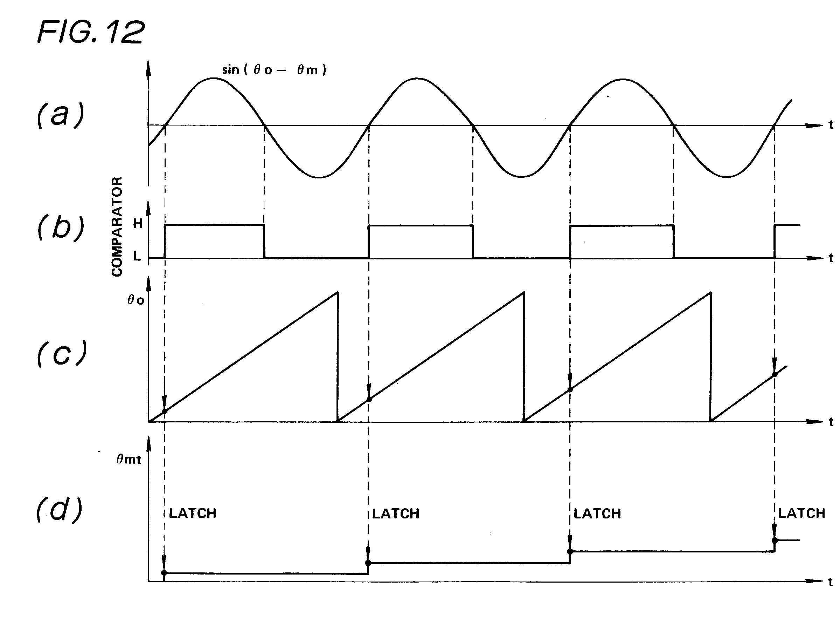

The output of the subtracter 130 representative of "sin ($\theta$ - $\theta$m) is fed to a comparator 132. As shown in Figs. 12(a) and (b), the comparator 132 outputs a high-level signal "H" to the latch 120 each time the output of the subtracter 130 representative of sin ($\theta 0$ - $\theta$m) is positive, and also outputs a low-level signal "L" to the latch 120 each time the output of the subtracter 130 is negative. As shown in Figs. 12(c) and (d), the latch 120 latches the reference phase data $\theta 0$ each time the output of the comparator 132 goes high. The latched data is regarded as data corresponding to "$\theta$m", and is fed from the latch 120 to a digital subtracter 134 as sampling data $\theta$mt. As shown in Fig. 13(a), the sampling data $\theta$mt is increased by several bits in a step-by-step manner, and therefore this sampling data is interpolated by a digital first-order lag filter constituted by the subtracter 134, a rate multiplier 136 and a counter 138. The count $\theta$m' of the counter 138 is supplied in an interpolated form. More specifically, a difference between the sampling data $\theta$mt and the content $\theta$m' of the counter 138 is obtained by the subtracter 134, and difference data representative of this difference is fed from the subtracter 134 to the rate multiplier 136. The rate multiplier 136 thins out the reference pulses fed from the oscillator 112 at a rate determined by the difference data fed from the subtracter 134, and outputs the thinned-out pulse train to the counter 138. In this case, the greater the difference data is, the higher the frequency of the pulse signal fed to the counter 138 becomes. Therefore, as shown in Fig. 13(a), the count $\theta$m' of the counter 138 is smoothly increased in accordance with the sampling data $\theta$m. And, the position pulse signal Pf as shown Fig. 13(b) is obtained by outputting the LSB ($2^0$) of the count $\theta$m'. Thus, the rotational-position detecting circuit 110 outputs the pulse signal Pf representative of the position of rotation of the drum 28 during the movement of the sensor rotor 58 by an amount corresponding to one pitch P0 of the sensor rotor teeth ST0.

Referring again to Fig. 2, a F/V converter 142 (frequency-to-voltage converter) converts the position pulse signal Pf, outputted from the rotational-position detecting circuit 110, to a voltage signal and outputs this voltage signal to a subtracter 144 as a speed feedback signal Vf corresponding to the speed of rotation of the drum 28. An up-down counter 146 counts up pulses of a position command pulse signal Pref fed from a pulse generator 148 and counts down pulses of the position pulse signal Pf outputted from the rotational-position sensing circuit 110. The count of the up-down counter 146, that is, data representative of a difference between the number of the pulses of the position command pulse signal Pref and the number of the pulses of the position pulse signal Pf, is converted into an analog signal by a D/A converter 150 and is outputted from the D/A converter 150 as a speed reference signal Pe. The speed reference signal Pe outputted from the D/A converter 150 is fed to the subtracter 144 in which the speed feedback signal Vf is subtracted from the speed reference signal Pe, and the output of the subtracter 144 is fed to the speed control circuit 94.

The speed control circuit 94 determines the magnitude of the current amplitude command signal Iref in such a manner that the speed reference signal Pe becomes equal in magnitude to the speed feedback signal Vf. More specifically, when the speed of rotation of the pulse motor 10 (and hence the drum 28) is lowered due, for example, to a variation in load torque, so that the speed reference signal Pe becomes greater in magnitude than the speed feedback signal Vf (Pe > Vf), the speed control circuit 94 increases the magnitude of the current amplitude command signal Iref in order to accelerate the speed of the pulse motor 10. On the other hand, when the speed of rotation of the pulse motor 10 (and hence the drum 28) is increased, so that the speed reference signal Pe becomes smaller in magnitude than the speed feedback signal Vf (Pe < Vf), the speed control circuit 94 decreases the magnitude of the current amplitude command signal Iref in order to decelerate the speed of the pulse motor 10. In such cases, when the speed reference signal Pe becomes equal in magnitude to the speed feedback signal Pe again, the magnitude of the current amplitude command signal Iref is maintained at that value. Therefore, the pulse motor is always rotated at a constant speed. In this case, the speed of rotation of the pulse motor 10 is determined by the frequency of the position command pulse signal Pref, and the higher the frequency of the pulse signal Pref is, the higher the speed of rotation of the pulse motor 10 becomes.

The operation of the drum drive system will now be described with respect to the case where the rotor 12 of the pulse motor 10 is to be rotated at a selected speed. In this case, it is assumed that the rotor 12 is stopped at a predetermined initial stop position.

First, the frequency of the position command pulse signal Pref is set to a value corresponding to the selected speed of rotation of the rotor 12, and the position command pulse signal Pref is fed to the up-down counter 146. At this time, since the drum 28 is stopped, the frequency of the position pulse signal Pf outputted from the rotational-position detecting circuit 110 is zero. Therefore, the counter 146 only counts up the pulses of the position command pulse signal Pref, so that the count of the counter 146 temporarily becomes great. As a result, the speed reference signal Pe is greater in magnitude than the speed feedback signal Vf (Pe > Vf), the speed control circuit 94 increases the magnitude of the current amplitude command signal Iref so as to achieve the acceleration. Then, the current control circuit 98 supplies to the motor coil 50 the alternating current which has an amplitude corresponding to the current amplitude command signal Iref outputted from the speed control circuit 94 and is in phase with the detecting signal Ea (cos $\theta$m) outputted from the pole position sensing circuit 76. At the same time, the current control circuit 104 supplies to the motor coil 52 the alternating current which has an amplitude corresponding to the current amplitude command signal Iref outputted from the speed control circuit 94 and is in phase with the sensing signal Eb (sin $\theta$m) outputted from the pole position sensing circuit 76. Therefore, a bipolar operation of the pulse motor 10 is started by the two-phase drive current, and the rotor 12 is rotated quite smoothly. In this case, since the current amplitude command signal Iref is of a relatively high magnitude, the rotor 12 is accelerated, and its rotational speed becomes higher gradually.

Then, as the rotational speed of the rotor 12 becomes higher gradually, the rotational-position sensing circuit 110 outputs the position command pulse signal Pf having a frequency corresponding to the speed of rotation of the rotor 12, and the up-down counter 146 counts down the pulses of the position command pulse signal Pf, so that the count of the counter 146 becomes smaller gradually. Therefore, the difference in magnitude between the speed reference signal Pe and the speed feedback signal Vf becomes smaller gradually, so that the current amplitude command signal Iref gradually becomes smaller gradually. Therefore, although the speed of rotation of the rotor 12 continues to become higher, the acceleration, that is, the rate of increase of the rotational speed, gradually becomes lower.

Then, when the rotational speed of the rotor 12 reaches the selected level, the speed reference signal Pe becomes equal in magnitude to the speed feedback signal Vf (Pe = Vf), and the value of the current amplitude command signal Iref obtained at that time is maintained. Thereafter, the rotor 12 continues to be rotated at the selected speed.

As described above, in the present invention, each of the current control circuits 98 and 104 controls the voltage applied to the motor coil 50 (52) in such a manner that the current command signal Ia (Ib) and the current feedback signal Ifa (Ifb) becomes equal in magnitude to each other, so that the drive current applied to each of the motor coils 50 and 52 is controlled in accordance with the current amplitude command signal Iref fed from the speed control circuit 94. With this system, the pulse motor 10 can be rotated as smoothly as a DC motor and can be accurately controlled.

## Claims

1. A stepping motor system comprising a pulse motor (10) with a rotor (12) and a stator (16), one of which is formed with a plurality of first teeth ($T_0$) formed with an equal spacing around the entire periphery and the other of which is formed with equally spaced second teeth ($T_1$) in opposed relation to the first teeth, the second teeth being arranged in groups associated with respective magnetic poles (18a-h) having excitation coils (46a-h) and configured to produce a given magnetic coupling relationship between the rotor and stator teeth, and detector means (26,76) for detecting the relative position of rotation between said rotor and stator teeth, said detector means (26,76) being arranged to produce a pole position detection signal (Ea, Eb) which varies in a manner corresponding to said coupling relationship upon relative rotation of the rotor and stator, current control means (98, 104) for controlling current applied to said excitation coils (46), and means (90, 92) for driving said current control means with a driving signal (Ia, Ib) of a phase related to that of said pole position detection signal **characterised in that** the spacing of the second teeth ($T_1$) in each said group is selected such that when a tooth thereof disposed centrally of the group is aligned with one of the first teeth, the second teeth in said group disposed on opposite sides of said centrally disposed tooth are progressively misaligned with corresponding opposed ones of said first teeth such that the area of overlap between the opposed first and second teeth progressively decreases in a circumferential direction outwardly of the center of the group, whereby the magnetic flux linkage between the rotor and stator varies sinusoidally upon rotation of the rotor in a manner tending to minimise torque ripple.

2. A system according to claim 1 wherein each said group includes five of said second teeth ($T_1$) such that when the central tooth thereof is aligned with one of said first teeth, the phase relationship between the second teeth of said group and corresponding opposed ones of said first teeth ($T_0$) is as follows: -90°, -45°, 0°, +45° and +90° respectively.

3. A system according to claim 1 or 2 including control means (94) for controlling said driving signal (Ia, Ib) to have a magnitude for keeping said motor speed constant.

4. A system according to any preceding claim including means (142) responsive to said position signal (Ea, Eb) to derive an actual speed signal (Vf) as a function of the actual speed of the motor, said speed control means (94) being responsive to said actual speed signal (Vf) for controlling said driving signal (Ia, Ib) to tend to keep the motor speed constant.

5. A system according to claim 4, including means (148) for defining a position command signal (Pref) as a function of a desired rotary displacement for the motor, means (110) responsive to said pole position signal (Ea, Eb) to derive a position signal (Pf) as a a function of the actual rotary displacement of the motor, means (146, 150) responsive to said position command and position reference signals (Pf, Pref) to derive a speed reference signal (Pe), and means for controlling said speed control means (94) as a function of said speed reference signal (Pe).

6. A system according to claim 5, including means (144) for combining said speed reference signal (Pe) with said actual speed signal (Vf) for controlling said speed control means (94).

7. A system according to any preceding claim wherein the rotor (12) is fixedly mounted within a rotary drum coaxially for rotation therewith, said first teeth ($T_0$) being formed at equal intervals over an entire inner periphery thereof, the stator (16) being disposed within said rotor coaxially therewith and the plurality of magnetic poles with the respective excitation coils (46a-h) being spaced equally circumferentially thereof with said second teeth ($T_1$) facing the first teeth.

8. A system according to claim 7, in which said detector means (26,76) comprises (i) a position sensor (26) which comprises an annular rotor (58) fixedly mounted within the drum coaxially therewith for rotation with the drum and having a series of teeth (ST0) formed at equal intervals over an entire inner periphery thereof, and a stator (56) disposed within said rotor coaxially therewith and having a plurality of magnetic poles (64a-h) having respective excitation coils (66a-h) and spaced equally circumferentially thereof, each of said magnetic poles of said position sensor having a series of stator teeth (ST1) disposed at equal intervals in opposed relation to said rotor teeth of said position sensor, the pitches of said rotor teeth and stator teeth of said position sensor being determined in such a manner that a magnetic flux linking each of said coils of said position sensor is changed in a sinusoidal fashion in synchronism with the rotation of said rotor of said position sensor; (ii) a signal generator (78) for feeding a carrier signal of a square waveform to said coils (66) of said position sensor; (iii) means for detecting currents flowing through said coils (66) of said position sensor to produce a multi-phase output signal (V1 - V4); (iv) means (80, 82) for rectifying said output signal to produce a multi-phase rectified signal; and (v) low pass filter means (84, 86) for filtering said rectified signal to produce said multi-phase sinusoidal pole position-detecting signal (Ea, Eb).

9. A system according to claim 8, in which the spacings of said rotor (ST0) and stator teeth (ST1) of said position sensor (26) are arranged in the same manner as the spacings of said rotor and stator teeth of said pulse motor (10).

**Revendications**

1. Système de moteur pas à pas comportant un moteur (10) à impulsions ayant un rotor (12) et un stator (16) dont l'un est formé de façon à présenter plusieurs premières dents ($T_0$) formées à un espacement égal le long de toute la périphérie et dont l'autre est formé de façon à présenter des secondes dentes ($T_1$), espacées de façon égale et dans une disposition opposée à celle des premières dents, les secondes dents étant agencées en groupes associés à des pôles magnétiques respectifs (18a-h) ayant des bobines d'excitation (46a-h) et configurés pour produire un couplage magnétique donné entre les dents du rotor et les dents du stator, et des moyens détecteurs (26, 76) destinés à détecter la position relative en rotation entre lesdites dents du rotor et lesdites dents du stator, lesdits moyens détecteurs (26, 76) étant agencés de façon à produire un signal (Ea, Eb) de détection de position de pôles qui varie d'une manière correspondant à ladite relation de couplage sous l'effet d'une rotation relative du rotor et du stator, des moyens (98, 104) de réglage de courant destinés à régler un courant appliqué auxdites bobines d'excitation (46), et des moyens (90, 92) destinés à commander lesdits moyens de réglage de courant à l'aide d'un signal de commande (Ia, Ib) d'une phase liée à celle dudit signal de détection de position de pôles, caractérisé en ce que

l'espacement des secondes dents $(T_1)$ dans chaque groupe est choisi de manière que, lorsqu'une dent de ce groupe située au centre du groupe est alignée avec l'une des premières dents, les secondes dents dans ledit groupe, disposées sur des côtés opposés de ladite dent disposée centralement, soient progressivement désalignées par rapport à certaines, opposées et correspondantes, desdites premières dents afin que la zone de chevauchement entre les premières et secondes dents opposées diminue progressivement dans une direction circonférentielle vers l'extérieur du centre du groupe, afin que la liaison par flux magnétique entre le rotor et le stator varie de façon sinusoïdale sous l'effet d'une rotation du rotor d'une manière tendant à minimiser l'ondulation du couple.

2.  Système selon la revendication 1, dans lequel chaque groupe comprend cinq desdites secondes dents $(T_1)$ de manière que, lorsque sa dent centrale est alignée avec l'une desdites premières dents, la relation de phase entre les secondes dents dudit groupe et certaines, opposées et correspondantes, desdites premières dents $(T_0)$ soit la suivante : -90°, -45°, 0°, +45° et +90°, respectivement.

3.  Système selon la revendicaion 1 ou 2, comprenant des moyens de réglage (94) destinés à régler ledit signal de commande (Ia, Ib) afin qu'il ait une amplitude pour maintenir constante la vitesse dudit moteur.

4.  Système selon l'une quelconque des revendications précédentes, comprenant des moyens (142) qui, en réponse audit signal de position (Ea, Eb), sont destinés à dériver un signal de vitesse réelle (Vf) en fonction de la vitesse réelle du moteur, lesdits moyens (94) de réglage de vitesse étant sensibles audit signal de vitesse réelle (Vf) pour régler ledit signal de commande (Ia, Ib) afin de tendre à maintenir constante la vitesse du moteur.

5.  Système selon la revendication 4, comprenant des moyens (148) destinés à définir un signal d'ordre de position (Pref) en fonction d'un déplacement souhaité en rotation pour le moteur, des moyens (110) qui, en réponse audit signal (Ea, Eb) de position de pôles, sont destinés à dériver un signal de position (Pf) en fonction du déplacement réel en rotation du moteur, des moyens (146, 150) qui, en réponse auxdits signaux d'ordre de position et de référence de position (Pf, Pref), sont destinés à dériver un signal de référence de vitesse (Pe), et des moyens destinés à régler lesdits moyens (94) de réglage de vitesse en fonction dudit signal de référence de vitesse (Pe).

6.  Système selon la revendication 5, comprenant des moyens (144) destinés à combiner ledit signal de référence de vitesse (Pe) avec ledit signal de vitesse réelle (Vf) pour régler lesdits moyens (94) de réglage de vitesse.

7.  Système selon l'une quelconque des revendications précédentes, dans lequel le rotor (12) est monté fixement et coaxialement à l'intérieur d'un tambour rotatif afin de tourner avec lui, lesdites premières dents $(T_0)$ étant formées à intervalles égaux sur sa périphérie intérieure complète, le stator (16) étant disposé à l'intérieur dudit rotor, coaxialement à lui, et les pôles magnétiques portant les bobines d'excitation respectives (46a-g) étant espacés de façon égale sur sa circonférence avec lesdites secondes dents $(T_1)$ faisant face aux premières dents.

8.  Système selon la revendication 7, dans lequel lesdits moyens détecteurs (26, 76) comprennent (i) un capteur (26) de position qui comporte un rotor annulaire (58) monté fixement et coaxialement à l'intérieur du tambour afin de tourner avec le tambour et ayant une série de dents (ST0) formées à intervalles égaux sur sa périphérie intérieure entière, et un stator (56) disposé coaxialement à l'intérieur dudit rotor et ayant plusieurs pôles magnétiques (64a-h) pourvus de bobines respectives (66a-h) d'excitation et espacés de façon égale sur sa circonférence, chacun desdits pôles magnétiques dudit capteur de position ayant une série de dents de stator (ST1) disposées à intervalles égaux en relation opposée auxdites dents de rotor dudit capteur de position, les pas desdites dents de rotor et desdites dents de stator dudit capteur de position étant déterminés de manière qu'un flux magnétique liant chacune desdites bobines dudit capteur de position soit modifié d'une façon sinusoïdale en synchronisme avec la rotation dudit rotor dudit capteur de position ; (ii) un générateur (78) de signal destiné à appliquer un signal porteur d'une forme d'onde carrée auxdites bobines (66) dudit capteur de position ; (iii) des moyens destinés à détecter des courants circulant dans lesdites bobines (66) dudit capteur de position pour produire un signal de sortie à phases multiples (V1-V4) ; (iv) des moyens (80, 82) destinés à redresser ledit signal de sortie pour produire un signal redressé à phases multiples ; et (v) des moyens à filtres passe-bas (84, 86) destinés à filtrer ledit signal redressé pour produire ledit signal sinusoïdal à phases multiples (Ea, Eb) de détection de position de pôles.

9. Système selon la revendication 8, dans lequel les espacements des dents dudit rotor (STO) et dudit stator (ST1) dudit capteur (26) de position sont agencés de la même manière que les espacements desdites dents du rotor et du stator dudit moteur (10) à impulsions.

**Patentansprüche**

1. Schrittmotorsystem, das einen Impulsmotor (10) mit einem Rotor (12) und einem Stator (16) umfaßt, wobei eines dieser Elemente mit einer Vielzahl von ersten Zähnen ($T_0$) ausgebildet ist, die mit gleichen Abständen um den gesamten Umfang herum ausgebildet sind, und von denen das andere mit in gleichen Abständen angeordneten zweiten Zähnen ($T_1$) in gegenüberliegender Relation zu den ersten Zähnen geformt ist, wobei die zweiten Zähne in Gruppen angeordnet sind, die entsprechenden Magnetpolen (18a - h) zugeordnet sind, welche Erregerspulen (46a - h) aufweisen und so konfiguriert sind, daß sie eine gegebene magnetische Kopplungsbeziehung zwischen den Rotor- und den Stator-Zähnen erzeugen, sowie Detektoreinrichtungen (26, 76) zum Detektieren der relativen Rotationsstellung zwischen den Rotor- und den Stator-Zähnen, wobei die Detektoreinrichtungen (26, 76) so angeordnet sind, daß sie ein Pol-Positions-Detektionssignal (Ea, Eb) erzeugen, das in einer Art variiert, die der Kopplungsbeziehung bei einer Relativdrehung zwischen Rotor und Stator entspricht, Strom-Steuereinrichtungen (98, 104) zum Steuern des Stroms, der an die Erregerwicklungen (46) angelegt wird, und Einrichtungen (90, 92) zum Ansteuern der Stromsteuereinrichtungen mit einem Treibersignal (Ia, Ib), das eine Phase besitzt, die auf die Phase des Pol-Positions-Detektionssignals bezogen ist, dadurch **gekennzeichnet,** daß der Abstand der zweiten Zähne ($T_1$) in jeder Gruppe so ausgewählt ist, daß dann, wenn ein zentral in der Gruppe angeordneter Zahn mit einem der ersten Zähne ausgerichtet ist, die zweiten Zähne in dieser Gruppe, die auf gegenüberliegenden Seiten des zentral angeordneten Zahns angeordnet sind, in fortschreitender Weise mit entsprechenden gegenüberliegenden Zähnen der Gruppe der ersten Zähne so fehlausgerichtet sind, daß der Überlappungsbereich zwischen einander gegenüberstehenden ersten und zweiten Zähnen in einer Umfangsrichtung, die vom Zentrum der Gruppe nach außen gerichtet ist, fortschreitend abnimmt, wodurch die Magnetflußverkettung zwischen dem Rotor und dem Stator bei einer Drehung des Rotors in einer Weise sinusförmig variiert, daß die Tendenz besteht, die Drehmoment-Welligkeit zu minimieren.

2. System nach Anspruch 1, bei dem jede Gruppe fünf zweite Zähne ($T_1$) so umfaßt, daß dann, wenn der zentrale Zahn der Gruppe mit einem der ersten Zähne ausgerichtet ist, die Phasenbeziehung zwischen den zweiten Zähnen der Gruppe und entsprechenden gegenüberstehenden Zähnen der ersten Gruppe ($T_0$) die folgenden Werte besitzt: -90°, -45° 0°, +45° bzw. +90°.

3. System nach Anspruch 1 oder 2, das Steuereinrichtungen (94) umfaßt, die dazu dienen, das Treibersignal (Ia, Ib) so zu steuern, daß es eine Größe besitzt, die erforderlich ist, um die Motorgeschwindigkeit konstant zu halten.

4. System nach einem der vorhergehenden Ansprüche, das Einrichtungen (142) umfaßt, die auf das Positionssignal (Ea, Eb) in der Weise ansprechen, daß sie ein der tatsächlichen Geschwindigkeit entsprechendes Signal (Vf) als Funktion der tatsächlichen Geschwindigkeit des Motors ableiten, wobei die Geschwindigkeits-Steuereinrichtungen (94) auf das der tatsächlichen Geschwindigkeit entsprechende Signal (Vf) in der Weise ansprechen, daß sie das Treibersignal (Ia, Ib) so steuern, daß es das Bestreben zeigt, die Motorgeschwindigkeit konstant zu halten.

5. System nach Anspruch 4, das Einrichtungen (148) umfaßt, die dazu dienen, ein Positions-Befehlssignal (Pref) als Funktion einer gewünschten Drehversetzung für den Motor zu definieren, Einrichtungen (110), die auf das Pol-Positionssignal (Ea, Eb) in der Weise ansprechen, daß sie ein Positionssignal (Pf) als Funktion der momentanen Drehversetzung des Motors ableiten, Einrichtungen (146, 150), die auf das Positions-Befehlssignal und das Positions-Referenzsignal (Pf, Pref) in der Weise ansprechen, daß sie ein Geschwindigkeits-Referenzsignal (Pe) ableiten, sowie Einrichtungen zum Steuern der Geschwindigkeits-Steuereinrichtungen (94) als Funktion des Geschwindigkeits-Referenzsignals (Pe).

6. System nach Anspruch 5, das Einrichtungen (144) umfaßt, die dazu dienen, das Geschwindigkeits-Referenzsignal (Pe) mit dem Signal für die momentane Geschwindigkeit (Vf) zu kombinieren, um die Geschwindigkeits-Steuereinrichtungen (94) zu steuern.

7. System nach einem der vorhergehenden Ansprüche, bei dem der Rotor (12) fest innerhalb einer Rotationstrommel koaxial für eine gemeinsame Drehung mit dieser montiert ist, wobei die ersten Zähne ($T_0$) in gleichen Intervallen über einen gesamten inneren Umfang hiervon ausgebildet sind, wobei der Stator (16) in dem Rotor mit diesem koaxial angeordnet und die Vielzahl von Magnetpolen mit den entsprechenden Erregerwicklungen (46a - h) in gleichförmigen Abständen in Umfangsrichtung hiervon angeordnet ist, und wobei die zweiten Zähne ($T_1$) den ersten Zähnen gegenüberliegen.

8. System nach Anspruch 7, bei dem die Detektoreinrichtung (26, 76) folgende Bestandteile umfassen:

(i) Einen Positionssensor (26), der einen ringförmigen Rotor (58) aufweist, der fest innerhalb der Trommel und für eine Rotation mit der Trommel mit dieser koaxial angeordnet ist und eine Reihe von Zähnen (STO) aufweist, die in gleichen Intervallen über einen gesamten Innenumfang hiervon ausgebildet sind, und einen Stator (56), der innerhalb des Rotors und mit diesem koaxial angeordnet ist und eine Vielzahl von Magnetpolen (64a - h) besitzt, die jeweils eine Erregerspule (66a - h) aufweisen und in seiner Umfangsrichtung in gleichen Abständen angeordnet sind, wobei jeder der Magnetpole des Positionssensors eine Reihe von Statorzähnen (ST1) besitzt, die in gleichen Intervallen in gegenüberstehender Relation zu den Rotorzähnen des Positionssensors angeordnet sind, und wobei die Teilung sowohl der Rotorzähne als auch der Statorzähne des Positionssensors derart festgelegt ist, daß die Magnetflußverkettung einer jeden Wicklung des Positionssensors in sinusförmiger Weise in Synchronisation mit der Rotation des Rotors des Positionssensors geändert wird,

(ii) einen Signalgenerator (78) zum Zuführen eines Trägersignals mit rechteckiger Wellenform zu den Wicklungen (66) des Positionssensors,

(iii) Einrichtungen zum Detektieren von Strömen, die durch die Wicklungen (66) des Positionssensors fließen, um ein Mehrphasen-Ausgangssignal (V1 - V4) zu erzeugen,

(iv) Einrichtungen (80, 82) zum Gleichrichten des Ausgangssignals zur Erzeugung eines mehrphasigen gleichgerichteten Signals, und

(v) Tiefpaßfiltereinrichtungen (84, 86) zum Filtern des gleichgerichteten Signals, um das Mehrphasen-Sinus-Pol-Positions-Detektionssignal (Ea, Eb) zu erzeugen.

9. System nach Anspruch 8, bei dem die Abstände der Rotor- und Statorzähne (ST0, ST1) des Positions-Sensors (26) in der gleichen Weise angeordnet sind, wie die Abstände der Rotor- und Statorzähne des Impulsmotors (10).

# FIG.1
## (PRIOR ART)

**FIG.2**

EP 0 230 134 B1

# FIG.3

EP 0 230 134 B1

FIG.4

FIG.6

## FIG.5

(a)

(b)

## FIG.7

# FIG.8

Sc ⊓⊔⊓⊔⊓⊔⊓⊔⊓⊔⊓⊔

26

Sc

78

**SIGNAL GENERATOR**

72 (66a +66e)
73 (66b +66f)
74 (66c +66g)
75 (66d + 66h)

R    R    R    R

○ V₁    ○ V₂    ○ V₃    ○ V₄

# FIG.9

80    84

V₁ ○

LPF

82    86

V₃ ○

LPF

88

+

−

→ Ea

# FIG.10

*FIG. 11*

(a)

(b)

Sin θo

Cosθ o

*FIG. 13*

(a)

θmt

θ'm

(b)

Pf

# FIG. 12

(a) $\sin(\theta o - \theta m)$

(b) COMPARATOR H / L

(c) $\theta o$

(d) $\theta mt$ — LATCH   LATCH   LATCH   LATCH